# EUROPEAN PATENT APPLICATION

(11) **EP 4 383 063 A1**
(43) Date of publication of application: **12.06.2024**
(21) Application number: 22211473.8
(22) Date of filing: 05.12.2022
(51) Int. Cl.: G06F 8/65, G06F 9/445

(54) **DEPLOY SERVICE FOR COORDINATED DEPLOY TO RUNTIME**

(71) Applicant: ABB SCHWEIZ AG, 5400 Baden (CH)
(72) Inventor: THILDERKVIST, Hans, 214 37 Malmö (SE); SASSO, Massimiliano, 16133 GENOVA (IT); KARLEKAR, Sunil, 560048 Bangalore (IN); JETLEY, Raoul, 560048 Bangalore (IN); MACAUDA, Andrea, 16165 GENOVA (IT); ANDERSSON, Staffan, 226 50 LUND (SE)
(74) Representative: Kransell & Wennborg KB

(57) **Abstract**

The present disclosure relates to a method performed by a deploy service 10 for coordinated deploy to RT services 15 in an automation system 17. The method comprises, from each of a plurality of engineering services 3, obtaining at least one configuration collection, each configuration collection being addressed to a specific one of the RT services. The method also comprises forwarding each of the obtained configuration collections to the RT service to which it is addressed. The method also comprises, for each of the configuration collections, in response to the forwarding thereof, receiving an acknowledgement from the RT service to which it was forwarded, indicating that the RT service is able to apply the configuration collection. The method also comprises, in response to receiving the acknowledgements for all of the configuration collections, instructing each of the RT services from which the acknowledgements were received to apply the configuration collections.

## Description

### TECHNICAL FIELD

The present disclosure relates to a method performed by a deploy service for coordinated deploy to runtime (RT) services in an automation system.

### BACKGROUND

In the context of an automation system, the term engineering deployment refers to the distribution of configuration information to the various runtime systems that vary from controllers to Human-Machine Interfaces (HMI:s). Engineering is performed in an automation system using different services and tools. The data from each of these in turn needs to be deployed on the runtime system. Traditionally, systems use a model-specific end-to-end deploy mechanism. In such a scheme, each engineering tool or service establishes an end-to-end connection to its corresponding runtime service(s). The deploy follows a two-step process per tool/service - first the version of configuration data in the runtime service is checked, and if it is not current, relevant data is transferred into the runtime service. Engineering tools (e.g. legacy or third party tools) use proprietary deploy protocols and data formats. Consequently, synchronized deploy is not feasible in this scheme.

### SUMMARY

It is an objective of the present invention to provide coordinated deploy of configurations to RT services.

According to an aspect of the present invention, there is provided a method performed by a deploy service for coordinated deploy to RT services in an automation system. The method comprises, from each of a plurality of engineering services, obtaining at least one configuration collection, each configuration collection being addressed to a specific one of the RT services. The method also comprises forwarding each of the obtained configuration collections to the RT service to which it is addressed. The method also comprises, for each of the configuration collections, in response to the forwarding thereof, receiving an acknowledgement from the RT service to which it was forwarded, indicating that the RT service is able to apply the configuration collection. The method also comprises, in response to receiving the acknowledgements for all of the configuration collections, instructing each of the RT services from which the acknowledgements were received to apply the configuration collections.

According to another aspect of the present invention, there is provided a deploy service comprising processing circuitry, and storage storing instructions executable by said processing circuitry whereby said deploy service is operative to perform an embodiment of the method of the present disclosure.

According to another aspect of the present invention, there is provided a deploy manager comprising an embodiment of the deploy service of the present disclosure, a deploy user interface, and a deploy store.

According to another aspect of the present invention, there is provided an automation system comprising an embodiment of the deploy manager of the present disclosure, the RT services, and the engineering services.

According to another aspect of the present invention, there is provided a computer program product comprising computer-executable components for causing a deploy service to perform an embodiment of the method of the present disclosure when the computer-executable components are run on processing circuitry comprised in the deploy service.

By means of the deploy service, acting as an intermediary between the engineering services and the RT services, forwarding of all the configuration collections to all the addressed RT services can be coordinated, and the configuration collections can be applied by the RT services in response to all RT services being able to apply them. Thus, configurations from multiple engineering services can be applied by multiple RT services in a synchronized deploy. In case not all RT services acknowledges that they can apply the configurations, the deploy may e.g. be rolled back or a partial deploy may be performed.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic block diagram of an automation system in accordance with some embodiments of the present invention.
Fig 2 is a schematic signalling diagram of an automation system, in accordance with some embodiments of the present invention.
Fig 3 is a schematic flow chart of a method in accordance with some embodiments of the present invention.
Fig 4 is a schematic block diagram of a deploy service in accordance with some embodiments of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

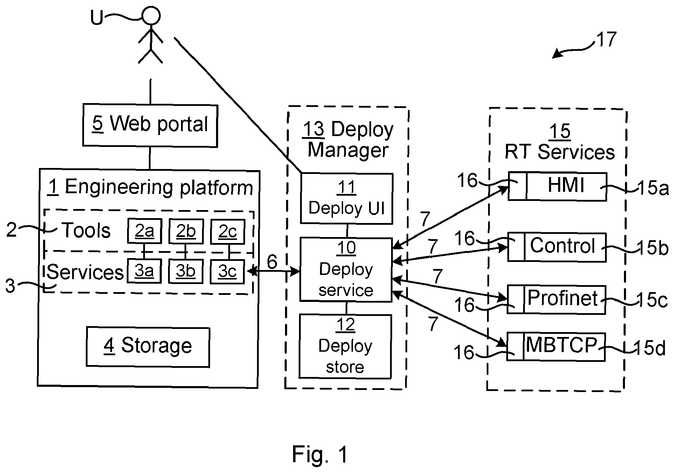

Figure 1 illustrates an automation system 17 comprising an engineering platform 1, a deploy manager 13 and RT services 15. The engineering platform 1 enables a user U, e.g. a human user, to update configurations for the different RT services. For preparing the updated configurations, the user may use different engineering tools 2, e.g. running on a computer of the user or hosted in a cloud, which tools 2 are linked, e.g. one-to-one, with engineering services 3 configured for preparing respective configuration collections for specific ones of the RT services 15. The tools 2 may e.g. relate to graphics, control, input/output etc., respectively. The engineering services 3 may conveniently run in a cloud for improved stability. In the example of figure 1, the engineering platform 1 is illustrated with three tools 2a, 2b and 2c, each linked with a respective engineering service 3a, 3b and 3c. A data storage 4 may be also comprised in the engineering platform 1, e.g. for storing configurations while updated by the tools 2 and for storing configuration collections before they are sent to the deploy manager 13. The user U may conveniently access the engineering platform 1, especially the tools 2 thereof via a web portal 5.

The engineering platform 1, typically the engineering services 3 thereof, communicate is able to communicate with the deploy service 10 of the deploy manager 13, via a communication link or network 6, e.g. including a Local Area Network (LAN) and/or a Virtual LAN (VLAN). In some embodiments, the communication 6 between the deploy service 10 and each of the engineering services 3 is in accordance with Hypertext Transfer Protocol (HTTP) Representational State Transfer (REST). Thus, the deploy service 10 may interact with each of the engineering services 3 via an HTTP REST interface.

Similarly, the deploy service 10 is able to communicate with each of the RT services 15, via a respective communication link or network 7, e.g. including a LAN and/or VLAN. In some embodiments, the communication 7 between the deploy service 10 and each of the RT services 15 is in accordance with Open Platform Communications (OPC) Unified Architecture (UA), i.e. over an OPC UA communication protocol.

The deploy service 10 is configured to obtain/receive respective configuration collections from the engineering services 3, where each configuration collection comprises an address, e.g. as metadata or in a header, or the like, of the intended recipient, i.e. a specific RT service. The deploy service 10 is also configured to forward each of the obtained configuration collections to its intended recipient (RT service). Thus, the deploy service 10 is typically agnostic about the content of the configuration collections, but merely forwards them as addressed. A function of the deploy service 10 is instead a possibility to coordinate the forwarding of the configuration collections, as well as, possibly more importantly, a possibility to coordinate if and/or when to instruct the RT services 15 to apply the configurations of the configuration collections forwarded to them.

For instance, the forwarding of the configuration collections may be in response to input from a user, e.g. a human user, possibly the same user as interacted with the engineering platform for preparing the configuration collections. Such input may e.g. be via a user interface (UI) 11 of the deploy manager 13. Thus, the forwarding may, in some embodiments, be in response to input from a user U, e.g. via a deploy user interface 11.

Additionally or alternatively, the instructing of each of the RT services, by the deploy service 10, to apply the configurations of the configuration collection forwarded to it may, in some embodiments, be triggered by input from a user U, e.g. a human user, possibly the same user as interacted with the engineering platform for preparing the configuration collections. Thus, the instructing may be triggered by input from a user U, e.g. via a deploy user interface 11.

Before forwarding the configuration collections, e.g. if forwarding is postponed until forwarding of some or all the configuration collections can be done synchronized, e.g. at the same time, the obtained configuration collections may be stored in a data storage 12 of the deploy manager 13. Thus, the obtained configuration collections may, in some embodiments, be stored in a deploy store 12 before the forwarding. The different parts of the deploy manager 13, including the deploy service 10 as well as any deploy UI 11 and/or deploy store 12 may typically be software functions running on computer resources, e.g. in the cloud.

The RT services 15 may include any number of RT services, of any type such as HMI(s) 15a, controller(s) 15b, Profinet(s) 15c and/or Modbus TCP/IP (MBTCP) module(s) 15d, where also Profinet and MBTCP are examples of controllers, e.g. for a Distributed Control System (DCS). Thus, in some embodiments, at least one of the RT services 15 is a controller 15b, 15c and/or 15d, e.g. comprised in a DCS. In some embodiments, at least one of the RT services 15 is an MBTCP module 15d and/or at least one of the RT services 15 is a Profinet module 15c. Additionally or alternatively, in some embodiments, at least one of the RT services 15 is an HMI 15a, e.g. comprising services for Operator Graphics, Trend Displays, and/or Alarm & Event Lists. Each RT service 15 may, in some embodiments, comprise a configuration manager 16 configured for receiving, and possibly processing, the configuration collection forwarded to the RT service from the deploy service 10.

Embodiments of the present invention may be especially advantageous for DCS, where the RT services 15 include distributed controllers, whereby DCS configuration data in configuration collections 22 may be distributed across DCS RT services 15 in a synchronized and coordinated way.

Optionally, status information may also be obtained from the respective RT services 15, before the configuration collections 22 are produced at the engineering platform 1. Thus, version metadata describing the current configurations running on each RT service may be fetched by the deploy service 10 to be passed back to the tools 2 where configuration collections 22 are produced. The metadata may determine whether an update is needed and may optionally be used to create a "delta" (differential) configuration collection, in order to reduce data size.

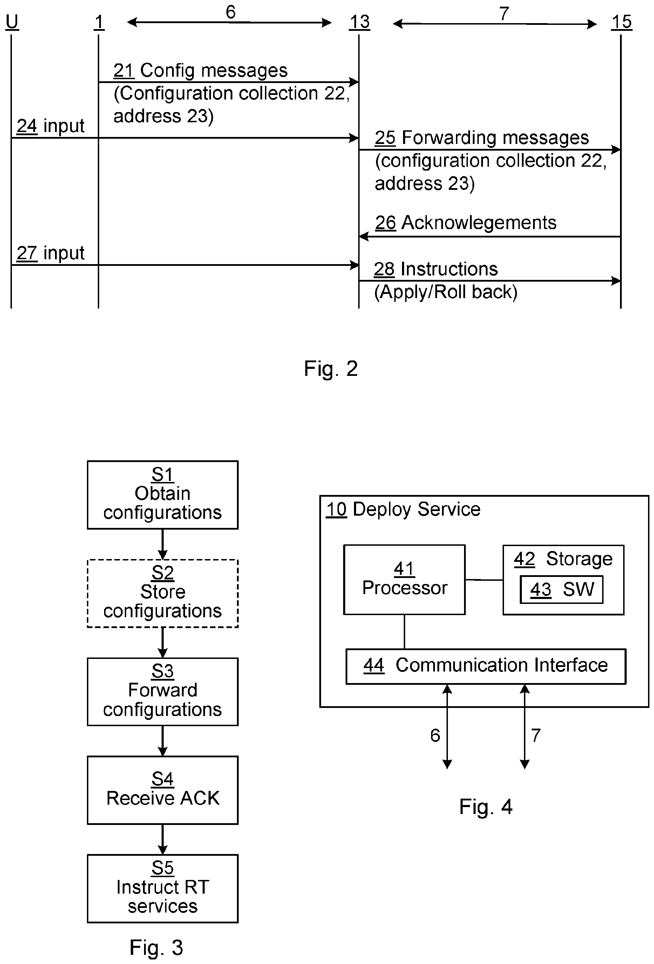

Figure 2 illustrates examples of signalling between the deploy manager 13, including the deploy service 10, and optionally also the deploy UI 11, and the engineering platform 1 and the RT services 15, respectively. Respective configuration messages 21 may be sent from the engineering services 3 of the engineering platform 1 to the deploy service 10 of the deploy manager 13. Each configuration message 21 comprises a configuration collection 22 and an address 23 to the RT service 15 which is the intended recipient of the configurations of the configuration collection.

Then, respective forwarding messages 25 are sent to the RT services 15. Each forwarding message 25 comprises at least one configuration collection 22 which was addressed to the RT service to which it is sent. Optionally, the forwarding message 25 also comprises the address 23, allowing the RT service to check that it is indeed the intended recipient. In some embodiments, the sending of the forwarding messages 25 may be triggered by input 24 from a user U, e.g. via the deploy UI 11.

Each RT service 15 may then check whether it is able to apply the, typically updated, configurations of the configuration collection(s) received from the deploy service 10. The RT service 15 may e.g. check whether it understands the received data, for instance that there is no signalling error, and that it has sufficient resources, e.g. memory and/or processing resources, available for applying the updated configurations of the configuration collection(s). Provided that the RT service 15 determines that it is able to apply the received configuration collection, it responds with a positive acknowledgement 26 to the deploy service 10. When the deploy service 10 has received respective acknowledgements 26 for each of the forwarded configuration collections 22, it may send respective instructions 28 to each of the RT services 15 to apply the configurations of the configuration collections. In case the deploy service 10 does not receive positive acknowledgements 26 from all RT services 15, the instructions 28 may instead be to roll back the deploy or to apply only the configuration collections 22 for which positive acknowledgements 26 were received, or some of those configuration collections. Regardless, in some embodiments, the sending of the instructions 28 may be triggered by input 27 from the user U, e.g. via the deploy UI 11.

Figure 3 illustrates some embodiments of the method of the present disclosure. The method is performed by the deploy service 10 for coordinated deploy to RT services 15 in an automation system 17. The method comprises, from each of a plurality of engineering services 3, obtaining S1 at least one configuration collection 22, each configuration collection being addressed 23 to a specific one of the RT services 15. Then, the method comprises forwarding S3 each of the obtained S1 configuration collections 22 to the RT service 15 to which it is addressed 23. For each of the configuration collections 22, in response to the forwarding S3 thereof, an acknowledgement 26 is received S4 from the RT service 15 to which it was forwarded, indicating that the RT service is able to apply the configuration collection. In response to receiving S4 the acknowledgements 26 for all of the configuration collections 22, each of the RT services 15 from which the acknowledgements were received are instructed S5 to apply the configuration collections.

In some embodiments, the method also comprises storing S2 the obtained S1 configuration collections 22 in a deploy store 12 before the forwarding S3 of the obtained S1 configuration collections 22 to the RT services 15.

Generally, the method uses the deploy service 10, functioning as a distribution orchestrator, to commit the configuration changes in two phases (two-phase commit). The first phase includes ensuring that all the RT services 15 have received and are able to apply the configuration data, e.g. that it understands the configuration data and has resources (available memory, processing bandwidth etc.) for applying it. The second phase includes committing or revert the changes. The method is extensible since it does not make any assumptions about the internal organization of configuration data, and therefore allows new engineering services 3 to be added, or old ones to be removed. The deploy service 10 may use discovery to identify the engineering services 3 that produce configuration data, and then requests from each of these services 3 its produced configuration collections 22 together with their respective target runtime services (address 23).

Figure 4 schematically illustrates an embodiment of the deploy service 10 of the present disclosure. The deploy service 10 comprises processing circuitry 41 e.g. a central processing unit (CPU). The processing circuitry 41 may comprise one or a plurality of processing units in the form of microprocessor(s). However, other suitable devices with computing capabilities could be comprised in the processing circuitry 41, e.g. an application specific integrated circuit (ASIC), a field programmable gate array (FPGA) or a complex programmable logic device (CPLD). The processing circuitry 41 is configured to run one or several computer program(s) or software (SW) 43 stored in a storage 42 of one or several storage unit(s) e.g. a memory. The storage unit is regarded as a computer readable means 42, forming a computer program product together with the SW 43 stored thereon as computer-executable components, and may e.g. be in the form of a Random Access Memory (RAM), a Flash memory or other solid state memory, or a hard disk, or be a combination thereof. The processing circuitry 41 may also be configured to store data in the storage 42, as needed. The deploy service 10 also comprises a communication interface, e.g. for communicating 6 with the engineering services 3 and/or for communicating 7 with the RT services 15, as well as optionally for communicating with other parts of the deploy manager 13 such as the deploy UI 11 and/or the deploy store 12.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method performed by a deploy service (10) for coordinated deploy to runtime, RT, services (15) in an automation system (17), the method comprising:
from each of a plurality of engineering services (3), obtaining (S1) at least one configuration collection (22), each configuration collection being addressed (23) to a specific one of the RT services (15);
forwarding (S3) each of the obtained (S1) configuration collections (22) to the RT service (15) to which it is addressed (23);
for each of the configuration collections (22), in response to the forwarding (S3) thereof, receiving (S4) an acknowledgement (26) from the RT service (15) to which it was forwarded, indicating that the RT service is able to apply the configuration collection;
in response to receiving (S4) the acknowledgements (26) for all of the configuration collections (22), instructing (S5) each of the RT services (15) from which the acknowledgements were received to apply the configuration collections.

2. The method of claim 1, wherein the forwarding (S3) is in response to input (24) from a user (U), e.g. via a deploy user interface (11).

3. The method of any preceding claim, further comprising:
storing (S2) the obtained (S1) configuration collections (22) in a deploy store (12) before the forwarding (S3).

4. The method of any preceding claim, wherein communication (7) between the deploy service (10) and each of the RT services (15) is in accordance with Open Platform Communications, OPC, Unified Architecture, UA.

5. The method of any preceding claim, wherein communication (6) between the deploy service (10) and each of the engineering services (3) is in accordance with Hypertext Transfer Protocol, HTTP, Representational State Transfer, REST.

6. The method of any preceding claim, wherein the instructing (S5) is triggered by input (27) from a user (U), e.g. via a deploy user interface (11).

7. The method of any preceding claim, wherein at least one of the RT services (15) is a controller (15b; 15c; 15d) comprised in a Distributed Control System, DCS.

8. The method of claim 7, wherein the at least one of the RT services (15) is a Modbus TCP/IP, MBTCP, module (15d).

9. The method of claim 7, wherein the at least one of the RT services (15) is a Profinet module (15c).

10. The method of any preceding claim, wherein at least one of the RT services (15) is a Human-Machine Interface, HMI, (15a), e.g. comprising services for Operator Graphics, Trend Displays, and/or Alarm & Event Lists.

11. A deploy service (10) comprising:
processing circuitry (41); and
storage (42) storing instructions (43) executable by said processing circuitry (41) whereby said deploy service (10) is operative to perform the method of any preceding claim.

12. A deploy manager (13) comprising:
the deploy service (10) of claim 11;
a deploy user interface (11); and
a deploy store (12).

13. An automation system (17) comprising:
the deploy manager (13) of claim 12;
the RT services (15); and
the engineering services (3).

14. The automation system of claim 13, wherein the engineering services (3) are comprised in an engineering platform (1) accessible to a user (U) via a web portal (5).

15. A computer program product (42) comprising computer-executable components (43) for causing a deploy service (10) to perform the method of any one of claims 1-10 when the computer-executable components are run on processing circuitry (41) comprised in the deploy service.
